# EUROPÄISCHE PATENTSCHRIFT

(11) **EP 2 073 034 B1**
(45) Veröffentlichungstag und Bekanntmachung des Hinweises auf die Patenterteilung: **09.02.2022**
(21) Anmeldenummer: 08021579.1
(22) Anmeldetag: 12.12.2008
(51) Int. Cl.: G01S 7/40, G01S 13/87, G01S 13/931, G01S 13/34, G01S 13/38

(54) **KRAFTFAHRZEUG MIT EINER KOMBINATION VON VORWÄRTSGERICHTETEN RADAREN MIT ÜBERLAPPENDEN ANTENNENKEULEN**
MOTOR VEHICLE WITH A COMBINATION OF FORWARD-LOOKING RADARS WITH OVERLAPPING BEAMS
VÉHICULE AUTOMOBILE AVEC UNE COMBINAISON DES RADARS DE VUE EN AVANT AYANT DES FAISCEAUX EN CHEVAUCHEMENT

(30) Priorität: 22.12.2007 DE 102007062566
(43) Veröffentlichungstag der Anmeldung: 24.06.2009
(73) Patentinhaber: Audi AG, 85045 Ingolstadt (DE)
(72) Erfinder: Held, Ralf, 85072 Eichstätt (DE); Holzmann, Manfred, 91171 Greding (DE); Goralczyk, Achim, 92339 Beilngries (DE)
(74) Vertreter: Thielmann, Frank

(56) Entgegenhaltungen:
- EP-A- 1 391 748
- WO-A-03/031228
- WO-A-2004/055547
- WO-A-2004/061475
- WO-A-2005/054895
- WO-A-2007/093299
- WO-A-2008/058777
- DE-A1- 2 327 186
- DE-A1- 10 241 456
- DE-A1- 10 349 210
- DE-A1- 19 935 265
- DE-A1-102005 015 259
- DE-A1-102006 005 501
- DE-U1- 9 421 081
- GB-A- 1 495 387
- JP-A- 2003 035 768
- US-A1- 2003 122 704

## Beschreibung

Die Erfindung betrifft ein Kraftfahrzeug gemäß dem Oberbegriff des Anspruchs 1.

Es ist bekannt, dass ein Kraftfahrzeug Einrichtungen zur Unterstützung des Fahrers aufweisen kann. Eine solche Einrichtung kann zum Erfassen des Nahbereichs vor dem Fahrzeug ausgebildet sein, eine andere Einrichtung kann zum Erfassen des Fernbereichs vor dem Fahrzeug ausgebildet sein.

Die DE 102 54 806 A1 offenbart ein Verfahren zur Kombination solcher einzelner, sich ergänzender Einrichtungen in Form eines Radarsensors, eines Bildsensors und eines Navigationssystems. Hierbei wird allerdings nicht die Qualität der Information der einzelnen Einrichtungen gesteigert, sondern es werden verschiedene, sich ausschließende, Informationen zu einem Gesamtbild zusammengefügt.

Aus der Druckschrift DE 102 41 456 A1 ist eine Sensoranordnung und ein Verfahren zur Abstandsregelung bei Kraftfahrzeugen bekannt. Die Sensoranordnung umfasst mindestens zwei Sensoren, deren Ortungswinkelbereiche ab einer ersten Distanz zusammen die gesamte Fahrzeugbreite abdecken und einander ab einer zweiten Distanz überlappen.

Eine Fahrerassistenzeinrichtung für ein Kraftfahrzeug ist aus der Druckschrift US 2003/0122704 A1 bekannt. Hierbei sind zumindest ein Strahlungssender und ein Strahlungsempfänger im Frontbereich des Kraftfahrzeugs vorgesehen. Zumindest der Strahlungssender ist bezüglich des Azimuts rotierbar angeordnet, wobei ein Rotationswinkel des Senders dem Rotationswinkel eines Scheinwerfers eines Kurvenlichts entspricht. Dies kann beispielsweise dadurch realisiert werden, dass der Sender gemeinsam mit einer Lichtquelle auf einer Platte angeordnet ist, die drehbar ist.

Ein Verfahren zur Objektdetektierung mit fahrzeuggebundenen Sensoren, deren Erfassungsbereiche sich wenigstens teilweise überlappen, ist aus der Druckschrift WO 2004/055547 A1 bekannt. Hierbei werden Signale von wenigstens zwei Sensoren mit im wesentlichen deckungsgleichen Erfassungsbereichen und zusätzliche Signale wenigstens eines weiteren Sensors erfasst. Der weitere Sensor weist einen Erfassungsbereich auf, dessen Winkelausdehnung wesentlich geringer ist als die Winkelausdehnungen der Erfassungsbereiche der ersten beiden Sensoren.

Aufgabe der Erfindung ist es, ein Kraftfahrzeug mit einer Einrichtung zum Erfassen des Fernbereichs vor dem Kraftfahrzeug anzugeben, bei dem die Qualität der Informationen der Einrichtung verbessert ist.

Die Aufgabe wird durch ein Kraftfahrzeug gemäß Anspruch 1 gelöst.

Hierdurch wird eine exaktere Erfassung der Objekte im Fernbereich des Fahrzeugvorfeldes ermöglicht. Im Überlappungsbereich erhält man redundante Informationen, die eine verlässlichere Analyse der Signale ermöglichen. Durch die Beabstandung der Erfassungseinrichtungen kann die Ablage des Objekts genauer ermittelt werden. Auch können Störeinflüsse beispielsweise durch Reflektion minimiert werden.

Die Sensoreinrichtungen sind zweckmäßigerweise als Radarsensoren ausgebildet. Radarsensoren, die zum Erfassen des Fernbereichs ausgebildet sind, heißen auch Long-Range-Radar.

Vorteilhafterweise sind die Sensoreinrichtungen oder diese ansteuernde Steuerungseinrichtungen so ausgebildet, dass sie gleichzeitig und/oder zeitversetzt im CW- und/oder FMCW-Modulationsmodus betreibbar sind. Der Wechsel der Modi ermöglicht bereits für jeden einzelnen Sensor eine exaktere Erfassung der Objekte im Fernbereich vor dem Kraftfahrzeug.

Vorzugsweise kann eine Sensoreinrichtung als Master arbeiten und alle anderen als Slave. Hierdurch kann die Steuerung der Sensoreinrichtungen vereinfacht werden.

Mit Vorteil können die Sensoreinrichtungen zum Erfassen des Fernbereichs vor dem Kraftfahrzeug um die Vertikalachse drehbar sein. Dadurch ist der überlappende Bereich, der die redundanten Informationen liefert, nicht mehr fest vorgegeben, sondern variierbar. In weiterer Ausgestaltung kann die Stellung der wenigstens zwei Sensoreinrichtungen des Fahrerassistenzsystems parallel und/oder in jedem beliebig anderen Winkel einstellbar sein. Ein paralleles Betreiben der Sensoreinrichtungen verhindert bei Drehung der Einrichtungen, dass der überlappende Bereich sich stark verschmälert, während eine beliebige Drehung der Sensoreinrichtungen zueinander den überlappenden Bereich auf beinahe jeden beliebigen Ort vor dem Kraftfahrzeug einstellbar macht.

Mit besonderem Vorteil kann die Stellung der dann wenigstens drei Sensoreinrichtungen zum Teil gruppenweise erfolgen. Insbesondere lassen sich dann zwei Sensoreinrichtungen parallel betreiben, die den Fernbereich direkt vor dem Fahrzeug erfassen, während die dritte und im Vergleich zu den beiden ersten Sensoreinrichtungen um einen gewissen Winkel gedrehte Sensoreinrichtung mit einem der ersten beiden Sensoreinrichtungen einen redundanten Bereich erzeugt, der dann beispielsweise auf der Gegenfahrbahn liegen kann. Sollten die parallel geschalteten Sensoreinrichtungen beispielsweise zum Tracking eines anderen Kraftfahrzeugs auf der Autobahn dieses bei einem Fahrspurwechsel verfolgen, kann dann der nicht parallele Sensor so ausgerichtet werden, dass er wieder mit einem der beiden anderen Sensoreinrichtungen die Fahrspur vor dem Kraftfahrzeug überwacht. Somit wird ein gezieltes Nachführen des einen redundanten Bereiches ermöglicht, ohne dass es zu Informationsverlusten vor dem Kraftfahrzeug kommt.

Mit besonderem Vorteil kann die Steuereinrichtung, die den Betrieb der Sensoreinrichtungen steuert, über einen Bus, insbesondere CAN-Bus, kommunizieren. Dadurch werden für die Steuerung alle Informationen, die im Fahrzeug durch andere Fahrerassistenzsysteme oder Erfassungssysteme verfügbar sind, zugänglich.

Die Drehung bzw. Verstellung der Sensoreinrichtungen erfolgt zweckmäßigerweise mittels über die Steuereinrichtung ansteuerbaren elektrischen Mitteln, z. B. kleinen Elektromotoren. Dadurch kann eine genaue Einstellung des Drehwinkels erreicht werden.

Vorteilhafterweise können die Sensoreinrichtungen in Abhängigkeit wenigstens einer Information, insbesondere wenigstens eines anderen Fahrerassistenzsystems und/oder wenigstens einer Betriebskomponente des Kraftfahrzeugs und/oder wenigstens einer Erfassungseinrichtung für wenigstens einen Betriebszustand des Kraftfahrzeugs, drehbar sein. Dadurch lässt sich die Einstellung der Sensoreinrichtungen abhängig von weiteren Informationsquellen variieren.

Vorzugsweise kann eine Information der Lenkwinkel eines Lenkrads oder der Radwinkel eines Fahrzeugrads des Kraftfahrzeugs sein. Aufgrund dieser über geeignete Sensoreinrichtungen erfassten Information wird es der Steuereinrichtung ermöglicht, den überlappenden Bereich der Sensoreinrichtungen besser an den zu erwartenden Fahrweg auszurichten. Bei einer Kurvenfahrt berührt die Fahrkurve die Gerade, die durch die Längsachse des Kraftfahrzeugs geht, nur tangential. Dies bedeutet, dass ein Erfassungsbereich, der an der Längsachse des Kraftfahrzeugs orientiert ist, gerade im Fernbereich niemals den eigentlichen Fahrtweg bedeckt. Hierdurch wird eine Korrektur nötig, die aufgrund der Information des Lenkwinkels eines Lenkrads oder des Radwinkels eines Fahrzeugrads vorgenommen werden kann.

Eine weitere Information kann die Fahrgeschwindigkeit des Kraftfahrzeugs sein. Bei geringen Fahrgeschwindigkeiten ist ein Nachstellen der Sensoreinrichtung zum Erfassen des Fernbereichs eher unnötig und kann daher unterbleiben, während bei sehr hohen Fahrgeschwindigkeiten für die Erfassung des Fernbereichs kurze Zeitabstände zur frühzeitigen Erkennung kritische Situationen notwendig ist. Von der Fahrgeschwindigkeit kann also die Betriebshäufigkeit der Sensoreinrichtungen abhängen. Auch kann von der Fahrgeschwindigkeit generell abhängig gemacht werden, ob die Sensoreinrichtungen überhaupt betrieben werden.

Eine weitere Information kann ferner die Giergeschwindigkeit des Kraftfahrzeugs sein. Auch diese Information verbessert die Einstellung des überlappenden Bereiches der Sensoreinrichtungen bei einer Kurvenfahrt.

Mit besonderem Vorteil kann ein weiteres Fahrerassistenzsystem ein Navigationssystem sein. Denkbar ist hierbei, dass der überlappende Bereich bei Näherkommen einer Kreuzung auch auf Bereiche ausgerichtet wird, in denen sich Kraftfahrzeuge dieser Kreuzung nähern könnten und bei denen mit einer Kollision zu rechnen sein kann. Andererseits kann auch diese Information dazu genutzt werden, den redundanten Bereich auf den Fahrweg auszurichten.

Vorzugsweise kann die von den Sensoreinrichtungen ermittelte Information bezüglich des Ortes und der Relativbewegung zum Kraftfahrzeug vorhandene mögliche Gefahrenobjekte in einem Headup-Display anzeigbar sein. Hierdurch kann der Fahrer frühzeitig vor möglichen Gefahrensituationen gewarnt werden und das Gefahrenmanagement selbst überwachen.

Auch kann die Information der Sensoreinrichtungen dazu benutzt werden, in besonders akuten Gefahrensituationen das Fahrzeug zu automatischen Sicherheitsmaßnahmen veranlassen. Hierdurch kann wertvolle Reaktionszeit eingespart werden, da der Fahrer in der Regel mindestens eine Sekunde von der Warnung bis zur Reaktion benötigt. Hierbei kann abhängig von der Gefahrenstufe der Gefahrensituation abhängig gemacht werden, ob das Fahrzeug zu automatischen Maßnahmen veranlasst wird oder ob dem Fahrer die Option zur eigenständigen Reaktion offengehalten wird.

Weitere Vorteile, Merkmale und Einzelheiten der Erfindung ergeben sich aus den im folgenden beschriebenen Ausführungsbeispielen sowie anhand der Zeichnungen. Dabei zeigen:
- Fig. 1: eine Prinzipdarstellung eines erfindungsgemäßen Kraftfahrzeugs in einer ersten Ausführungsform,
- Fig. 2: eine Prinzipdarstellung eines erfindungsgemäßen Kraftfahrzeugs in einer zweiten Ausführungsform, und
- Fig. 3: eine Prinzipdarstellung eines erfindungsgemäßen Kraftfahrzeugs.

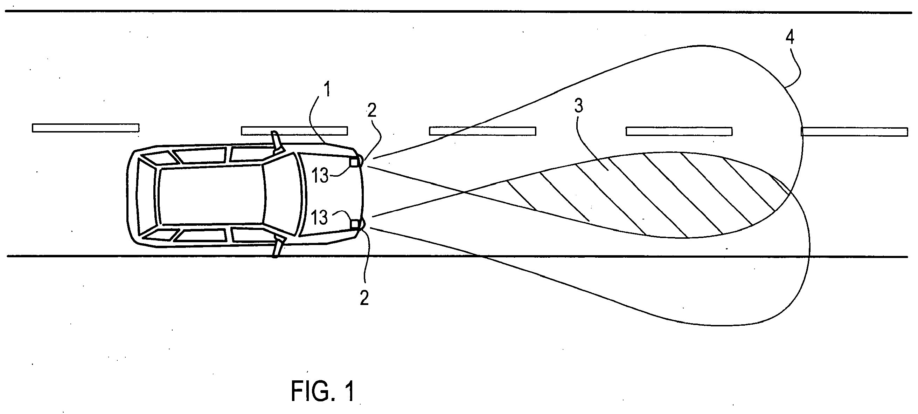

Fig. 1 zeigt ein erfindungsgemäßes Kraftfahrzeug 1 mit zwei Sensoreinrichtungen 2, die einen Überlappungsbereich 3 aufweisen, wo die Erfassungsbereiche 4 der Einzelsensoreinrichtungen sich überschneiden. Für den Überlappungsbereich 3 liegen somit redundante Informationen gleichartiger Sensoreinrichtungen 2 vor. Diese Redundanz erfolgt hier beispielsweise in einem Bereich bis ca. 200 m vor dem Kraftfahrzeug, allerdings ist der Bereich auch auf kürzere und weitere Entfernungen einstellbar. Durch die Identität der Sensoreinrichtungen ergeben sich mehrere Vorteile. Zum einen ist die Art des zurückgegebenen Signals identisch, d. h. dass die Signale bereits ohne weiterverarbeitende Schritte miteinander fusionierbar sind. Sie können allerdings auch erst nach beliebig vielen Prozessierungsschritten fusioniert werden. Somit kann in der Verarbeitungskette sehr frühzeitig begonnen werden, die Informationen zu bearbeiten. Des Weiteren ermöglicht die Redundanz der Informationen einer exakte Vermessung des Winkels, unter dem sich ein Objekt vor dem Kraftfahrzeug 1 bezüglich der Längsachse befindet. Auch können Fehlinformationen durch Reflexionen, insbesondere der Leitplanke, vermieden werden. Auf diese Weise werden auch Streuungen im Radarrückstreuungsquerschnitt, der von dem Winkel abhängt, ausgeglichen.

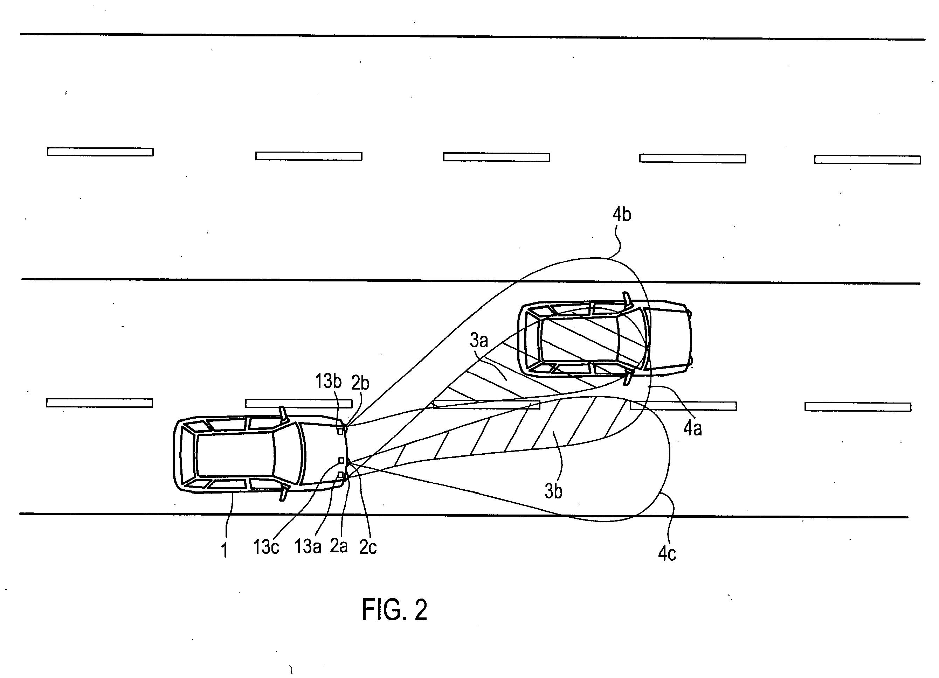

Fig. 2 zeigt ein erfindungsgemäßes Kraftfahrzeug 1 in einer zweiten Ausführungsform. Von den drei Sensoreinrichtungen 2a - c des Kraftfahrzeugs 1 sind die Sensoreinrichtungen 2a und 2b parallel ausgerichtet, während die dritte Sensoreinrichtung 2c nicht parallel ausgerichtet ist. Die Drehung der Sensoreinrichtungen 2a und 2b um die Vertikalachse wurde durch elektrische Mittel 13a und 13b in Form von Elektromotoren bewirkt. Diese Elektromotoren wurden durch die Steuerungseinrichtung 5 kontrolliert. Während die parallel ausgerichteten Sensoreinrichtungen 2a und 2b dazu benutzt werden, in ihrem Überlappbereich 3a ein vorausfahrendes Kraftfahrzeug nachzuverfolgen, dient die dritte Sensoreinrichtung 2c dazu, mit ihrem Erfassungsbereich 4c und einer weiteren Sensoreinrichtung 2a und deren Erfassungsbereich 4a einen Überlappbereich 3b vor dem Kraftfahrzeug zu schaffen, so dass auch der Fernbereich entlang der Längsachse vor dem Kraftfahrzeug 1 überwacht mittels redundanter Information wird.

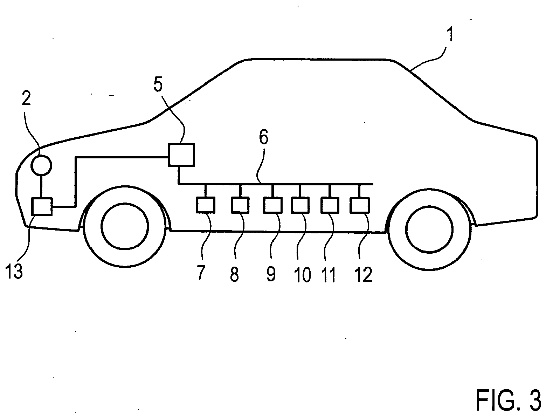

Fig. 3 zeigt ein erfindungsgemäßes Kraftfahrzeug 1. Dieses weist zumindest zwei Sensoreinrichtungen 2 auf, von denen eine dargestellt ist. Das Fahrzeug weist außerdem eine Steuereinrichtung 5, einen CAN-Bus 6, ein Navigationssystem 7, eine Einrichtung zum Erfassen des Gierwinkels 8, eine Einrichtung zum Erfassen der Fahrgeschwindigkeit 9, sowie weitere Fahrerassistenzsysteme 10, weitere Erfassungseinrichtungen für einen Betriebszustand des Kraftfahrzeugs 11 und Erfassungseinrichtung zu Betriebskomponenten 12 des Kraftfahrzeugs 1 auf. Dadurch ist eine Kombination sämtlicher Informationen, die das Fahrzeug in irgendeiner Weise betreffen, möglich, um die Drehung der Sensoreinrichtungen 2 sowie die Größe des Überlappungsbereichs 4 der Sensoreinrichtungen 2 zu optimieren.

## Patentansprüche

1. Kraftfahrzeug mit einer Einrichtung zum Erfassen des Fahrzeugvorfeldes, wobei die Einrichtung wenigstens zwei identische und separat arbeitende Sensoreinrichtungen zum Erfassen des Fernbereichs vor dem Kraftfahrzeug aufweist, die zu beiden Seiten der Fahrzeuglängsachse versetzt angeordnet sind und deren Erfassungsbereiche zumindest teilweise überlappen,
**dadurch gekennzeichnet,**
**dass** die Sensoreinrichtungen (2) zum Erfassen des Fernbereichs vor dem Kraftfahrzeug (1) drehbar um die Vertikalachse sind, wobei die Stellung der wenigstens zwei Sensoreinrichtungen (2) des Fahrerassistenzsystems derart sowohl parallel als auch in jedem beliebig anderen Winkel einstellbar ist, dass der Überlappungsbereich zum Erfassen des Fernbereichs vor dem Kraftfahrzeug (1) variierbar und seine Lage vor dem Kraftfahrzeug (1) einstellbar ist.

2. Kraftfahrzeug nach Anspruch 1,
**dadurch gekennzeichnet,**
**dass** die Sensoreinrichtungen (2) Radarsensoren sind.

3. Kraftfahrzeug nach Anspruch 2,
**dadurch gekennzeichnet,**
**dass** die Sensoreinrichtungen (2) oder diese ansteuernde Steuerungseinrichtungen (5) gleichzeitig oder zeitversetzt im CW- und/oder FMCW-Modulationsmodus betreibbar sind.

4. Kraftfahrzeug nach einem der vorhergehenden Ansprüche ,
**dadurch gekennzeichnet,**
**dass** eine Sensoreinrichtung (2) als Master arbeitet und die wenigstens eine zweite Sensoreinrichtung (2) als Slave.

5. Kraftfahrzeug nach einem der vorangehenden Ansprüche,
**dadurch gekennzeichnet,**
**dass** die Stellung im Falle von wenigstens drei Sensoreinrichtungen (2) zum Teil gruppenweise erfolgt.

6. Kraftfahrzeug nach einem der vorhergehenden Ansprüche,
**dadurch gekennzeichnet,**
**dass** die Steuereinrichtung (5), die den Betrieb der Sensoreinrichtungen (2) steuert, über einen Bus, insbesondere CAN-Bus (6), kommuniziert.

7. Kraftfahrzeug nach einem der vorhergehenden Ansprüche,
**dadurch gekennzeichnet,**
**dass** die Sensoreinrichtungen (2) in Abhängigkeit wenigstens einer Information, insbesondere wenigstens eines anderen Fahrerassistenzsystems (10) oder wenigstens einer Erfassungseinrichtung für wenigstens einen Betriebszustand (12) des Kraftfahrzeugs (1), drehbar sind.

8. Kraftfahrzeug nach Anspruch 7,
**dadurch gekennzeichnet,**
**dass** eine Information der Lenkwinkel eines Lenkrads oder der Radwinkel eines Fahrzeugrads des Kraftfahrzeugs (1) ist.

9. Kraftfahrzeug nach einem der Ansprüche 7 oder 8,
**dadurch gekennzeichnet,**
**dass** eine weitere Information die Fahrgeschwindigkeit des Kraftfahrzeugs (1) ist.

10. Kraftfahrzeug nach einem der Ansprüche 7 bis 9,
**dadurch gekennzeichnet,**
**dass** eine weitere Information die Giergeschwindigkeit des Kraftfahrzeugs (1) ist.

11. Kraftfahrzeug nach einem der Ansprüche 7 bis 10,
**dadurch gekennzeichnet,**
**dass** ein anderes Fahrerassistenzsystem ein Navigationssystem (7) ist.

## Claims

1. Motor vehicle with a device for detecting the area in front of the vehicle, wherein the device has at least two identical and separately operating sensor devices for detecting the far range in front of the motor vehicle, which are arranged offset on both sides of the longitudinal axis of the vehicle and whose detection ranges overlap at least partially,
**characterised in that**,
the sensor devices (2) for detecting the far range in front of the motor vehicle (1) are rotatable about the vertical axis, wherein the position of the at least two sensor devices (2) of the driver assistance system is adjustable both parallel and in any other angle in such a way that the overlapping area for detecting the far range in front of the motor vehicle (1) can be varied and its position in front of the motor vehicle (1) can be adjusted.

2. Motor vehicle according to claim 1,
**characterised in that**,
the sensor devices (2) are radar sensors.

3. Motor vehicle according to claim 2,
**characterised in that**,
the sensor devices (2) or control devices (5) driving them can be operated simultaneously or with a time delay in CW and/or FMCW modulation mode.

4. Motor vehicle according to any of the preceding claims,
**characterised in that**,
a sensor device (2) operates as a master and the at least one second sensor device (2) as a slave.

5. Motor vehicle according to any of the preceding claims,
**characterised in that**,
in the case of at least three sensor devices (2) the positioning is partly performed in groups.

6. Motor vehicle according to any of the preceding claims,
**characterised in that**,
the control device (5), which controls the operation of the sensor devices (2), communicates via a bus, in particular a CAN-bus (6).

7. Motor vehicle according to any of the preceding claims,
**characterised in that**,
the sensor devices (2) can be rotated as a function of at least one item of information, in particular at least one other driver assistance system (10) or at least one detection device for at least one operating state (12) of the motor vehicle (1).

8. Motor vehicle according to claim 7,
**characterised in that**,
an item of information is the steering angle of a steering wheel or the wheel angle of a vehicle wheel of the motor vehicle (1).

9. Motor vehicle according to any of claims 7 or 8,
**characterised in that**,
a further item of information is the driving speed of the motor vehicle (1).

10. Motor vehicle according to any of claims 7 to 9,
**characterised in that**,
a further item of information is the yaw speed of the motor vehicle (1).

11. Motor vehicle according to any of claims 7 to 10,
**characterised in that**,
a further driver assistance system is a navigation system (7).

## Revendications

1. Véhicule automobile avec un dispositif pour détecter un avant proche du véhicule, dans lequel le dispositif présente au moins deux dispositifs de détection identiques et fonctionnant séparément pour une détection de la zone éloignée devant le véhicule automobile, qui sont agencés de manière décalée de part et d'autre de l'axe longitudinal du véhicule et dont les zones de détection se chevauchent au moins partiellement,
**caractérisé en ce que**
les dispositifs de détection (2) pour détecter la zone éloignée devant le véhicule automobile (1) peuvent tourner autour de l'axe vertical, dans lequel la position des au moins deux dispositifs de détection (2) du système d'assistance au conducteur peuvent être réglée à la fois parallèlement et sous n'importe quel autre angle souhaité de telle sorte que la zone de chevauchement pour détecter la zone éloignée devant le véhicule automobile (1) peut être modifiée et sa position devant le véhicule automobile (1) peut être réglée.

2. Véhicule automobile selon la revendication 1,
**caractérisé en ce que**
les dispositifs de détection (2) sont des détecteurs radar.

3. Véhicule automobile selon la revendication 2,
**caractérisé en ce que**
les dispositifs de détection (2) ou les dispositifs de commande (5) qui les commandent peuvent être actionnés simultanément ou avec une temporisation dans le mode de modulation CW et/ou FMCW.

4. Véhicule automobile selon l'une quelconque des revendications précédentes, **caractérisé en ce qu'**
un dispositif de détection (2) fonctionne comme un maître et les au moins deux seconds dispositifs de détection (2) fonctionnent comme un esclave.

5. Véhicule automobile selon l'une quelconque des revendications précédentes,
**caractérisé en ce que**
dans le cas d'au moins trois dispositifs de détection (2), le positionnement s'effectue en partie par groupes.

6. Véhicule automobile selon l'une quelconque des revendications précédentes,
**caractérisé en ce que**
le dispositif de commande (5), qui commande le fonctionnement des dispositifs de détection (2), communique par l'intermédiaire d'un bus, en particulier d'un bus CAN (6).

7. Véhicule automobile selon l'une quelconque des revendications précédentes,
**caractérisé en ce que**
les dispositifs de détection (2) peuvent être mis en rotation en fonction d'au moins une information, en particulier d'au moins un autre système d'assistance au conducteur (10) ou d'au moins un dispositif de détection pour au moins un état de fonctionnement (12) du véhicule automobile (1).

8. Véhicule automobile selon la revendication 7,
**caractérisé en ce qu'**
une information est l'angle de braquage d'un volant de direction ou l'angle de braquage d'une roue de véhicule du véhicule automobile (1).

9. Véhicule automobile selon l'une quelconque des revendications 7 ou 8,
**caractérisé en ce qu'**
une information supplémentaire est la vitesse de conduite du véhicule automobile (1).

10. Véhicule automobile selon l'une quelconque des revendications 7 à 9,
**caractérisé en ce qu'**
une information supplémentaire est la vitesse de lacet du véhicule automobile (1).

11. Véhicule automobile selon la revendication 7 ou 10,
**caractérisé en ce qu'**
un autre système d'assistance au conducteur est un système de navigation (7).
